Europäisches Patentamt

European Patent Office

Office européen des brevets

(11) Veröffentlichungsnummer: 0 182 961
A1

(12) EUROPÄISCHE PATENTANMELDUNG

(21) Anmeldenummer: 85105811.5

(22) Anmeldetag: 11.05.85

(51) Int. Cl.⁴: B 66 C 1/04
H 01 F 7/04

(30) Priorität: 26.06.84 DE 3423482

(43) Veröffentlichungstag der Anmeldung:
04.06.86 Patentblatt 86/23

(84) Benannte Vertragsstaaten:
BE FR GB IT NL SE

(71) Anmelder: Thyssen Edelstahlwerke AG
Thyssenstrasse 1
D-4000 Düsseldorf(DE)

(72) Erfinder: Hübner, Klaus-Dieter, Dr.-Ing.
Gotenstrasse 152
D-5840 Schwerte(DE)

(72) Erfinder: Oettinghaus, Dieter, Ing. grad.
Im Kirchenberg 21
D-5800 Hagen(DE)

(72) Erfinder: Stanek, Wolfram, Dr.-Ing.
Bergstrasse 10
D-5401 Hummenroth(DE)

(54) Permanentmagnetische Lastgreif- oder Halteeinrichtung.

(57) Die Einrichtung, umfaßt einen in einem magnetisch leitenden Eisenrückschluß (5) zentral angeordneten in Richtung seiner kleinsten Abmessung magnetisierten Permanentmagneten (1) auf dem eine magnetisch leitende Kompensationsplatte (2) mit magnetisch leitendem Steg (3) und magnetisch leitenden Mittelpol (6) sitzt und ferner eine elektrische Spule (4) zwischen Kompensationsplatte und Mittelpol zur Kompensation (Verdrängen) des Magnetfeldes aus dem Bereich des Arbeitsluftspaltes (7). Zur optimalen Kompensation, d.h. zum weitestgehend verzögerungsfreien Abwerfen von ferromagnetischen dicken bis dünnsten Teilen bei gleichzeitig hohen Kräften stehen erfindungsgemäß die baulichen Abmessungen des Systems in gegenseitigen Beziehungen, die im Anspruch 1 im einzelnen angegeben sind.

EP 0 182 961 A1

Fig.1

## Permanentmagnetische Lastgreif- oder Halteeinrichtung

BEZEICHNUNG GEÄNDERT,
siehe Titelseite

Die Erfindung betrifft eine elektrisch steuerbare permanentmagnetische Lastgreif- oder Halteeinrichtung zum Heben, Fördern und Stapeln ferromagnetischer Teile. Die Einrichtung umfaßt einen in einem magnetisch leitenden Eisenrückschluß zentral angeordneten, in Richtung seiner kleinsten Abmessung magnetisierten Permanentmagneten, auf dem eine magnetisch leitende Kompensationsplatte mit magnetisch leitendem Steg und magnetisch leitendem Mittelpol sitzt. Die Einrichtung umfaßt ferner eine elektrische Spule zwischen Kompensationsplatte und Mittelpol zur Kompensation (Verdrängung) des Magnetfeldes aus dem Bereich des Arbeitsluftspaltes. Diese Lastgreif- oder Halteeinrichtung dient zur optimalen Kompensation, d.h. zum weitestgehend verzögerungsfreien Abwerfen von ferromagnetischen dicken bis dünnsten Teilen bei gleichzeitig hohen Haftkräften.

Es bereitet große Schwierigkeiten, permanentmagnetische Lastgreif- oder Halteinrichtungen, insbesondere für den hängenden Transport von Blechen, so auszubilden, daß sie einmal sehr dünne und zum anderen aber auch dicke Bleche beim Fördern zur Haftung bringen. Diese Forderung kann nur dann erfüllt werden, wenn die Haftkraft der Lastgreif- oder Halteeinrichtung auf die dickste vorkommende Abmessung des Blechs ausgerichtet ist, damit auch dicke Bleche sicher gehalten werden. Dies bedeutet andererseits dann, daß es außerordentlich schwierig ist, diese großen Haftkräfte in möglichst kurzer Zeit unwirksam zu machen, was Voraussetzung ist für einen gezielten Abwurf der Bleche. Es ist bereits bekannt, die permanentmagnetische Haftkraft dadurch nach außen unwirksam werden zu lassen, daß durch eine elektrische Spule ein Gegenfeld erzeugt wird, das den Permanentmagnetfluß in einen Nebenfluß verdrängt (Schüler/Brinkmann: "Dauermagnete-Werkstoffe und Anwendungen", 1970, S. 547 ff.).

-.-

Bei Magneteinrichtungen dieser Art war es bisher möglich, wentweder nur dünnste Bleche oder nur dickere Bleche zu stapeln.

Ziel der Erfindung ist nun die Schaffung einer Lastgreif- oder Halteeinrichtung, mit der es gelingt, Bleche unabhängig von ihrem Volumen, insbesondere ihrer Dicke, mit geringstmöglicher Verzögerung abfallen zu lassen.

Die zu lösende Aufgabe besteht darin, eine permanentmagnetische Lastgreif- oder Halteeinrichtung der eingangs genannten Gattung dahingehend zu verbessern, daß auch bei großen Haftkräften dünnste und dicke Bleche sicher abfallen und kurze Schaltzeiten erreicht werden. Dabei soll der innere Streufluß der Einrichtung minimal und die benötigte elektrische Kompensationsenergie möglichst klein sein.

Zur Lösung dieser Aufgabe wird bei einer permanentmagnetischen Lastgreif- oder Halteeinrichtung der eingangs genannten Gattung erfindungsgemäß vorgeschlagen, die baulichen Abmessungen in den im Anspruch 1 genannten Verhältnissen aufeinander abzustimmen.

Aufgrund von Berechnungen und durch Versuche wurde festgestellt, daß alle angegebenen und beanspruchten Abmessungsverhältnisse eingehalten werden müssen, um die gestellte Aufgabe zu lösen. Insbesondere erfüllt die erfindungsgemäße Lastgreif- oder Halteeinrichtung folgende Bedingungen:

1) Optimale Flußverdrängung in der Abfallphase sowohl für dünnste und dicke Bleche.

2) Trotz hoher Haltekräfte minimale elektrische Konzentrationsenergie.

Für die konkrete Bauausführung ergeben sich zwei Möglichkeiten: Rotationssymmetrisches oder rechteckiges Topfsystem. Bei rechteckförmigen Systemen kann die Längenabmessung auf das vorzugsweise zu transportierende Blechspektrum angepaßt werden.

In Verbindung mit einer geeigneten elektronischen Schaltung kann z.B. eine solche Einrichtung vom Bauvolumen 2300 cm$^3$ mehr als 200 Ein- und Ausschaltungen pro Minute ausführen.

Gemäß einer bevorzugten Ausgestaltung der erfindungsgemäßen Lastgreif- oder Halteeinrichtung soll die Schaltspule im Kompensationsfall mit Spannungsüberhöhung und zusätzlicher Strombegrenzung betrieben werden. Dadurch kann erreicht werden, daß die Iststromstärke in der Schaltspule in kürzester Zeit auf den Sollwert gebracht werden kann.

Anhand des in der Zeichnung dargestellten Ausführungsbeispiels wird die Erfindung erläutert.

Die Figur zeigt einen Querschnitt der Lastgreif- oder Halteeinrichtung. Darin bezeichnen 1 den über seine kleinste Abmessung magnetisierten Dauermagneten, 2 die auf einer Polfläche (in der Figur der S-Pol) angebrachte Kompensationsplatte und 3 den Steg, beide aus magnetisch leitendem Material, 4 die elektrische Kompensationsspule, 5 den topfförmigen Eisenrückschluß, der die gesamten Bauteile des Systems umgibt, 6 den magnetisch leitenden Mittelpol und 7 den Arbeitsluftspalt. Die im Anspruch 1 angegebenen Breiten- und Höhenabmessungen sind in der Figur mit $b_1$ bis $b_6$ bzw. $h_1$ bis $h_4$ bezeichnet. Für die praktische Auslegung des Magnetsystems genügt die Kenntnis bzw. die Festlegung der Breite $b_5$ des Dauermagneten 1 des Systems. Mit $b_5$ kann man nach den im Anspruch angegebenen Verhältnissen alle übrigen Dimensionsgrößen des Systems berechnen.

A n s p r ü c h e

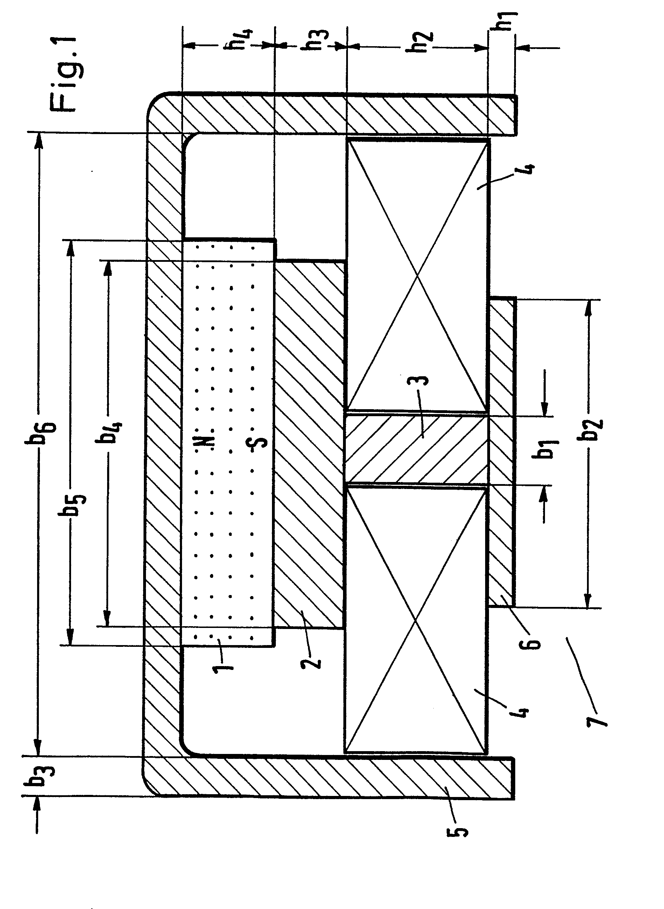

1. Elektrisch steuerbare permanentmagnetische Lastgreif- oder
   Halteeinrichtung zum Heben, Fördern und Stapeln ferromagnetischer
   Teile, mit einem in einem magnetisch leitenden Eisenrückschluß
   (5) zentral angeordneten, in Richtung seiner kleinsten Abmessung
   magnetisierten Permanentmagneten (1), auf dem eine magnetisch
   leitende Kompensationsplatte (2) mit magnetisch leitendem Steg (3)
   und magnetisch leitendem Mittelpol (6) sitzt, und mit einer elektrischen Spule (4) zwischen Kompensationsplatte und Mittelpol zur
   Kompensation (Verdrängen) des Magnetfeldes aus dem Bereich des
   Arbeitsluftspaltes (7), gekennzeichnet durch folgende Beziehungen
   der baulichen Abmessungen (vergl. Fig. 1) der Lastgreifeinrichtung:

$$(1) \quad \frac{b_5}{b_6} = \frac{0.55 \text{ bis } 0.75}{1}$$

$$(2) \quad \frac{b_4}{b_5} = \frac{0.8 \text{ bis } 1.0}{1}$$

$$(3a) \quad \frac{b_1}{b_5} = \frac{0.15 \text{ bis } 0.2}{1} \quad \text{für ferritische Dauermagnete}$$

$$(3b) \quad \frac{b_1}{b_5} = \frac{0.4}{1} \quad \text{für Dauermagnete aus Seltenerden-Kobaltlegierungen}$$

$$(4) \quad \frac{b_2}{h_3} = \frac{0.9 \text{ bis } 1.1}{1}$$

$$(5) \quad \frac{b_3}{b_1} = \frac{0.5 \text{ bis } 0.6}{1}$$

$$(6) \quad \frac{b_3}{b_2} = \frac{0.1 \text{ bis } 0.15}{1}$$

**0182961**

$$(7a) \quad \frac{h_4}{b_5} = \frac{0.15 \text{ bis } 0.1}{1} \qquad \text{für ferritische Dauermagnete}$$

$$(7b) \quad \frac{h_4}{b_5} = \frac{0.05 \text{ bis } 0.1}{1} \qquad \text{für Dauermagnete aus Selten-}$$
$$\text{erden-Kobaltlegierungen}$$

$$(8) \quad \frac{h_2}{b_5} = \frac{0.3 \text{ bis } 0.4}{1}$$

$$(9) \quad \frac{h_1}{b_1} = \frac{0.25 \text{ bis } 0.4}{1}$$

2. Einrichtung nach Anspruch 1, dadurch gekennzeichnet, daß die Schaltspule (4) im Kompensationsfall mit Spannungsüberhöhung und zusätzlicher Strombegrenzung betrieben wird.

Fig.1

1/1

0182961

**Europäisches Patentamt**

# EUROPÄISCHER RECHERCHENBERICHT

**0182961**

Nummer der Anmeldung

EP 85 10 5811

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | DE-U-1 793 796 (DEUTSCHE EDELSTAHLWERKE AG) * Anspruch; Figur; Seite 2, Zeile 24 - Seite 3, Zeile 11 * | 1 | B 66 C 1/04 H 01 F 7/04 |
| A | FR-A-2 216 657 (NOUAL) * Figuren 1-3 * | 1 | |
| A | DE-B-1 178 189 (DEMAG-ZUG GMBH) * Spalte 1, Zeile 1 - Spalte 2, Zeile 15 * | 1 | |
| A | DE-B-1 014 674 (MAGNETFABRIK GEWERKSCHAFT WINDHORST) | | |

--- 

**RECHERCHIERTE SACHGEBIETE (Int. Cl.4)**

B 66 C 1/00
H 01 F 7/00

Der vorliegende Recherchenbericht wurde für alle Patentansprüche erstellt.

| Recherchenort BERLIN | Abschlußdatum der Recherche 20-09-1985 | Prüfer KANAL P K |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82